# EUROPEAN PATENT SPECIFICATION

(11) **EP 4 414 646 B1**
(45) Date of publication and mention of the grant of the patent: **03.12.2025**
(21) Application number: 23204232.5
(22) Date of filing: 18.10.2023
(51) Int. Cl.: F26B 3/04, F26B 13/00, F26B 13/10, F26B 21/00

(54) **COANDA EFFECT HOT AIR BLOWER AND SECONDARY BATTERY ELECTRODE DRYING APPARATUS INCLUDING THE SAME**
HEISSLUFTGEBLÄSE MIT COANDA-EFFEKT UND SEKUNDÄRBATTERIEELEKTRODENTROCKNUNGSVORRICHTUNG DAMIT
SOUFFLANTE D'AIR CHAUD À EFFET COANDA ET APPAREIL DE SÉCHAGE D'ÉLECTRODE DE BATTERIE SECONDAIRE LA COMPRENANT

(30) Priority: 13.02.2023 KR 20230019012
(43) Date of publication of application: 14.08.2024
(73) Proprietor: People & Technology Inc., Gyeongsangbuk-do 39422 (KR)
(72) Inventor: KIM, JOON SUP, Gumi-si, Gyeongsangbuk-do (KR); YONG, HYUN HO, Gumi-si, Gyeongsangbuk-do (KR); SHIN, SHIN WOO, Gumi-si, Gyeongsangbuk-do (KR)
(74) Representative: BCKIP Part mbB

(56) References cited:
- WO-A1-01/35031
- DE-A1- 2 613 135
- DE-U1- 9 109 313
- JP-A- 2013 116 650
- JP-B2- 3 334 044
- KR-A- 20150 108 707

## Description

### Field of the Invention

The present invention relates to a Coanda effect hot air blower and a secondary battery electrode drying apparatus including the same for drying and curing an electrode material applied to an electrode current collector in a process of manufacturing an electrode of a secondary battery.

### Description of the Related Art

A secondary battery is a rechargeable battery, which is configured such that ions in an electrolyte move between a positive electrode and a negative electrode insulated from each other by a separator, thereby repeatedly performing charge and discharge thereof. A positive electrode and a negative electrode of a secondary battery commonly include an electrode current collector made of a metal material and an electrode material that is applied to the electrode current collector and is dried and cured.

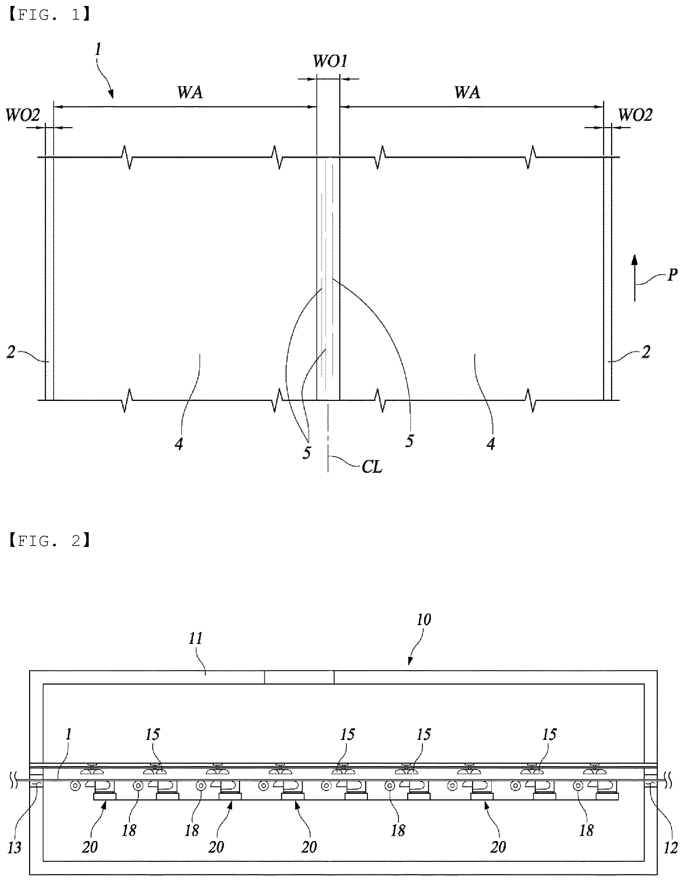

FIG. 1 is a plan view showing an example of a web 1 of an electrode of a secondary battery.

Referring to the drawing, the web 1 of an electrode of a secondary battery includes a metal foil-type electrode current collector 2 that extends continuously and a slurry-type electrode material 4 that is applied to the surface of the electrode current collector 2 and is dried and cured. The electrode current collector 2 is fed in the direction of arrow P in a roll-to-roll facility for manufacturing an electrode of a secondary battery.

The web 1 of an electrode of a secondary battery includes coated regions WA, in which the electrode material 4 is stacked on the surface of the electrode current collector 2, and uncoated regions WO1 and WO2, in which the electrode material 4 is not stacked so that the electrode current collector 2 is exposed.

The uncoated regions WO1 and WO2 include a center uncoated region WO1, in which the electrode current collector 2 is exposed between a pair of adjacent coated regions WA, and peripheral uncoated regions WO2, in which two opposite peripheral portions of the electrode current collector 2 in a width direction of the electrode current collector 2, which is perpendicular to the feeding direction P of the electrode current collector 2, are exposed.

The electrode material 4 applied to the surface of the electrode current collector 2 is quickly dried by the flow of high-temperature air, i.e., hot air, while passing through a drying apparatus. However, during the high-temperature drying process, stress accumulated due to a difference in shrinkage rate between the electrode current collector 2 and the electrode material 4 causes generation of wrinkles 5 in the center uncoated region WO1. Because these wrinkles 5 may cause short circuit and fire in a secondary battery, a secondary battery electrode with the wrinkles 5 is treated as defective. Therefore, there is a problem that a defect rate increases when manufacturing an electrode of a secondary battery and the productivity of good products is deteriorated.

Korean Patent Laid-Open Publication No. 10-2021-0061877 discloses an apparatus and method for manufacturing a negative electrode of a secondary battery.

A further blower for guiding a material strip in a noncontact fashion is disclosed in DE 26 13 135 A1.

### SUMMARY OF THE INVENTION

The present invention has been made to solve the above problems, and it is an object of the present invention to provide a Coanda effect hot air blower and a secondary battery electrode drying apparatus including the same capable of suppressing generation of wrinkles in an uncoated region while drying an electrode material applied to an electrode current collector.

It is another object of the present invention to provide a Coanda effect hot air blower and a secondary battery electrode drying apparatus including the same capable of using the kinetic energy of hot air to a maximum extent by inducing the flow of hot air in a width direction of a web of an electrode while feeding the web of the electrode.

To achieve these objects, the present invention, in accordance with claim 1, provides a Coanda effect hot air blower configured to discharge hot air in order to dry a web of an electrode of a secondary battery in which a plurality of coated regions and a plurality of uncoated regions are alternately disposed in a width direction.

The web may be a web of an electrode of a secondary battery including an electrode current collector and an electrode material applied to the electrode current collector.

Each of the plurality of first inclined guide fins may include an inflow-side end and an inflow stream guide provided on the inflow-side end to guide hot air entering a region between the plurality of first inclined guide fins so that the hot air flows parallel to the plurality of first inclined guide fins, and each of the plurality of second inclined guide fins may include an inflow-side end and an inflow stream guide provided on the inflow-side end to guide hot air entering a region between the plurality of second inclined guide fins so that the hot air flows parallel to the plurality of second inclined guide fins.

In accordance with another aspect of the present invention, there is provided an apparatus for drying a web of an electrode of a secondary battery including an electrode current collector and an electrode material applied to the electrode current collector in accordance with claim 4. The apparatus includes a drying chamber configured to allow the web of an electrode of a secondary battery to pass therethrough and a plurality of Coanda effect hot air blowers configured to discharge hot air in order to dry the web of an electrode of a secondary battery, wherein the plurality of Coanda effect hot air blowers is arranged below the web of an electrode of a secondary battery in a feeding direction of the web of an electrode of a secondary battery in the drying chamber, and wherein each of the plurality of Coanda effect hot air blowers is the Coanda effect hot air blower according to the present invention.

The apparatus may further include a plurality of infrared light heaters configured to radiate infrared light to the web of an electrode of a secondary battery to heat and dry the electrode material, and the plurality of infrared light heaters may be arranged above the web of an electrode of a secondary battery in the feeding direction of the web of an electrode of a secondary battery in the drying chamber.

The plurality of Coanda effect hot air blowers may be disposed in parallel at the same height in the drying chamber to form a generally horizontal structure.

### BRIEF DESCRIPTION OF THE DRAWINGS

The above and other objects, features, and other advantages of the present invention will be more clearly understood from the following detailed description taken in conjunction with the accompanying drawings, in which:
FIG. 1 is a plan view showing an example of a web of an electrode of a secondary battery;
FIG. 2 is a cross-sectional view of a secondary battery electrode drying apparatus according to an embodiment of the present invention;
FIG. 3 is a view for explaining operation of a Coanda effect hot air blower in FIG. 2;
FIG. 4 is a plan view showing an inner surface of a housing of the Coanda effect hot air blower in FIG. 3 in a state of spreading the same from IV to IV';
FIG. 5 is a view for explaining a problem caused when an interval between first inclined guide fins and an interval between second inclined guide fins shown in FIG. 4 are large;
FIG. 6 is a view showing a modified example of the first inclined guide fins applicable to the Coanda effect hot air blower according to an embodiment of the present invention; and
FIG. 7 is a partially cut-away perspective view three-dimensionally showing the appearance of the first inclined guide fins shown in FIG. 6.

### DETAILED DESCRIPTION OF THE INVENTION

Hereinafter, a Coanda effect hot air blower and a secondary battery electrode drying apparatus including the same according to embodiments of the present invention will be described in detail with reference to the accompanying drawings. Terms used in this specification are used to appropriately describe exemplary embodiments of the present invention, and thus may be changed in accordance with the intention of users or operators, or usual practice in the art to which the present invention pertains. Therefore, the definitions of these terms should be determined based on the total content of this specification.

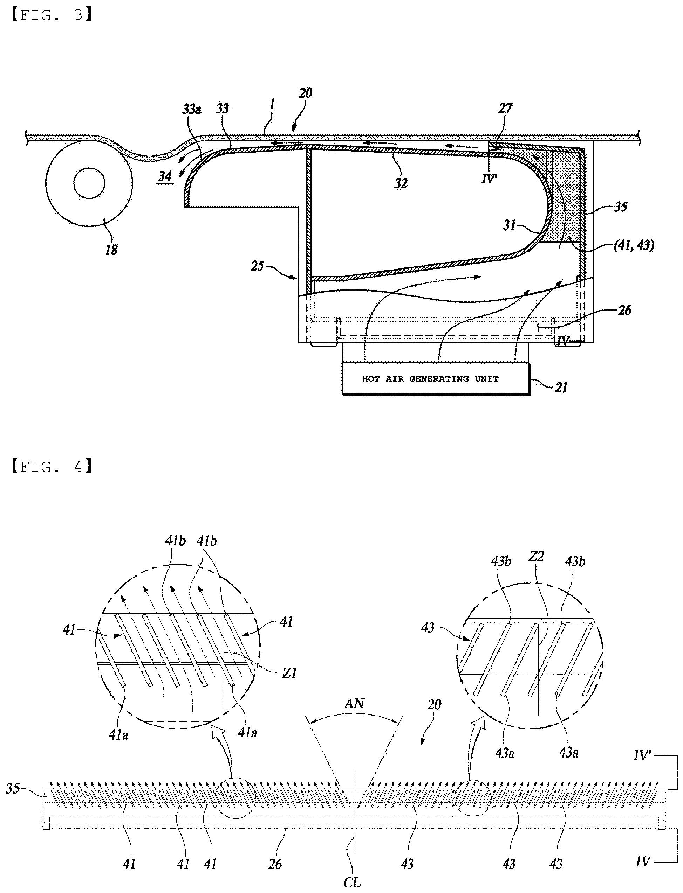

FIG. 2 is a cross-sectional view of a secondary battery electrode drying apparatus 10 according to an embodiment of the present invention. FIG. 3 is an enlarged cross-sectional view of a Coanda effect hot air blower 20 in FIG. 2. FIG. 4 is a plan view showing an inner surface of a housing of the Coanda effect hot air blower in FIG. 3 in a state of spreading the same from IV to IV'.

Referring to FIGs. 1 and 2 together, the secondary battery electrode drying apparatus 10 according to an embodiment of the present invention is an apparatus that dries a secondary battery electrode web 1, which includes an electrode current collector 2 and an electrode material 4 applied to the electrode current collector 2. In a secondary battery manufacturing facility that manufactures an electrode of a secondary battery through a roll-to-roll method, the secondary battery electrode drying apparatus 10 is disposed on the downstream side of an electrode material coating apparatus (not shown) that applies the slurry-type electrode material 4 to the surface of the electrode web 1 along the feeding route of the electrode web 1.

The secondary battery electrode drying apparatus 10 includes a drying chamber 11, a plurality of support rollers 18, a plurality of Coanda effect hot air blowers 20, and a plurality of infrared light heaters 15.

The secondary battery electrode web 1 passes through the drying chamber 11. The drying chamber 11 includes an inlet 12 formed in one side thereof to allow the electrode web 1 to be introduced thereinto and an outlet 13 formed in the opposite side thereof to allow the electrode web 1 to be discharged therefrom. The plurality of support rollers 18 serves to support the electrode web 1 that is fed from the inlet 12 to the outlet 13 in the drying chamber 11. The plurality of support rollers 18 is arranged so as to be spaced apart from each other at regular intervals between the inlet 12 and the outlet 13 in the drying chamber 11.

The plurality of infrared light heaters 15 is disposed above the secondary battery electrode web 1 in the drying chamber 11 so as to be spaced apart from each other at regular intervals in the feeding direction of the electrode web 1. The infrared light heaters 15 radiate infrared light to the electrode material 4 applied to the upper surface of the electrode current collector 2 to heat and dry the electrode material 4. Each of the infrared light heaters 15 may include a near infrared light lamp configured to emit near infrared light. The near infrared light emitted from the near infrared light lamp penetrates deep into the slurry-type electrode material 4, thereby quickly drying the electrode material 4 within a few seconds.

Referring to FIGs. 1 to 4 together, the plurality of Coanda effect hot air blowers 20 discharges hot air in order to dry the secondary battery electrode web 1 in the drying chamber 11. The plurality of Coanda effect hot air blowers 20 is disposed below the electrode web 1 so as to be spaced apart from each other at regular intervals in the feeding direction of the electrode web 1. Each of the Coanda effect hot air blowers 20 is located between two adjacent support rollers.

Each of the Coanda effect hot air blowers 20 includes a housing 25 and a hot air generating unit 21. The hot air generating unit 21 is disposed under the housing 25, and may include a heater (not shown) or a heat exchanger (not shown) configured to heat air and a fan (not shown) configured to blow the heated air into the housing 25.

In addition, the housing 25 includes a lower opening 26 formed in a lower portion thereof to allow the hot air generated from the hot air generating unit 21 to enter the housing 25. In addition, the housing 25 includes a nozzle slit 27 formed in an upper portion thereof to discharge the hot air that has passed through the housing 25. The nozzle slit 27 extends in a width direction of the secondary battery electrode web 1. The hot air is discharged from the nozzle slit 27 to a region between the lower surface of the electrode web 1 that is being fed and an outer straight guide side wall 32, which will be described later.

The housing 25 includes a guide side wall 35, an inner curved guide side wall 31, an outer straight guide side wall 32, and an outer curved guide side wall 33. The guide side wall 35 and the inner curved guide side wall 31 guide the hot air in the housing 25 to the nozzle slit 27. The flow cross-sectional area of the hot air defined by the guide side wall 35 and the inner curved guide side wall 31 is gradually reduced as it approaches the nozzle slit 27, that is, as the hot air moves upward. Therefore, the hot air is discharged through the nozzle slit 27 at a high flow rate and high pressure.

The outer straight guide side wall 32 is smoothly connected to the inner curved guide side wall 31, and extends upward outside the nozzle slit 27 so as to be inclined while forming an acute angle of 45° or less with respect to the feeding direction of the secondary battery electrode web 1.

In addition, the outer curved guide side wall 33 is smoothly connected to the outer straight guide side wall 32, and extends downward along a predetermined curved route. In other words, the outer curved guide side wall 33 has a shape curved downward. The surface of the outer curved guide side wall 33 is a Coanda surface 33a. The Coanda surface 33a is a curved surface that guides the hot air flowing along the outer curved guide side wall 33 in the downward direction. The hot air flows downward along the Coanda surface 33a according to the well-known Coanda principle. Accordingly, a downward flow area 34 is formed in the space ahead of the outer curved guide side wall 33. The downward flow area 34 is a low-pressure area, and thus pulls the electrode web 1 downward.

Accordingly, the hot air discharged through the nozzle slit 27 passes at high speed between the outer straight guide side wall 32 and the electrode web 1, and then flows to the downward flow area 34. In particular, since the inner pressure is low due to the high flow rate of the hot air between the outer straight guide side wall 32 and the electrode web 1, the electrode web 1 is pulled downward. In other words, the lifting phenomenon of the electrode web 1 is prevented. Even when the electrode web 1 is fed at high speed, there is no worry about the electrode web 1 being lifted, so long as the Coanda effect hot air blower 20 operates.

Further, the hot air that has moved obliquely upward along the outer straight guide side wall 32 and has passed by the lower surface of the electrode web 1 moves downward to the downward flow area along the outer curved guide side wall 33. Due to this flow of hot air, the electrode web 1 is attracted to the flow of hot air, and thus is pulled downward. As the electrode web 1 is pulled downward, the surface contact area between the electrode web 1 and the support roller 18 increases. If the electrode web 1 is kept horizontal, the electrode web 1 is in linear contact with the support roller 18. However, the above-described flow of hot air causes the electrode web 1 to be brought into surface contact with the support roller 18. Since the contact area between the electrode web 1 and the support roller 18 increases, the slip phenomenon of the electrode web 1 does not occur. Further, it is possible to accurately feed the electrode web.

The guide side wall 35 is provided therein with a plurality of first inclined guide fins 41 and a plurality of second inclined guide fins 43. The first inclined guide fins 41 and the second inclined guide fins 43 are fixed so as to be inclined in opposite directions with respect to the center point CL in the width direction of the electrode web 1. Therefore, as indicated by the arrows in FIG. 4, the hot air discharged after being guided by the first inclined guide fins 41 and the hot air discharged after being guided by the second inclined guide fins 43 travel away from each other in the width direction of the electrode web 1.

As such, since the Coanda effect hot air blower 20 discharges hot air in a direction from the center point CL of the electrode web 1 toward the two opposite peripheral portions of the electrode web 1 in the width direction, air pressure acts such that the center uncoated region WO1 of the electrode web 1 spreads in the width direction of the electrode web 1. Accordingly, the generation of wrinkles 5 in the center uncoated region WO1 is suppressed. As a result, a defect rate is reduced when manufacturing an electrode of a secondary battery, and the productivity of good products is improved.

It is possible to suppress the generation of wrinkles 5 both when the discharge direction of the hot air through the nozzle slit 27 is identical to the feeding direction of the electrode web 1 and when the discharge direction of the hot air through the nozzle slit 27 is opposite the feeding direction of the electrode web 1.

An angle AN between the first inclined guide fins 41 and the second inclined guide fins 43 is 20 degrees to 90 degrees, preferably 40 degrees to 60 degrees. If the angle AN is smaller than 20 degrees, the effect of suppressing the generation of wrinkles 5 may be insufficient, and if the angle AN is larger than 90 degrees, the electrode material 4 may be insufficiently dried.

Although the Coanda effect hot air blower 20 exhibiting the effect of suppressing the generation of wrinkles 5 has been descried above as being applied to the electrode web 1 having the uncoated region WO1 at the center point CL thereof in the width direction, the Coanda effect hot air blower 20 according to the present invention may also identically exhibit the effect of suppressing the generation of wrinkles 5 in a secondary battery electrode web in which an uncoated region is present at a point other than the center point CL thereof in the width direction or a plurality of uncoated regions is present.

The first inclined guide fins 41 and the second inclined guide fins 43 may be plate-shaped members having a predetermined thickness, and an inclination angle thereof with respect to the vertical line may be 10 degrees to 45 degrees, preferably 20 degrees to 30 degrees. According to the invention, the first inclined guide fins 41 and the second inclined guide fins 43 are inclined in opposite directions.

An interval between the first inclined guide fins 41 is set as follows.

When the upper end of each of the first inclined guide fins 41 is defined as an outflow-side end 41b and the lower end of each of the first inclined guide fins 41 is defined as an inflow-side end 41a, as shown in FIG. 4, the interval between the first inclined guide fins 41 is set such that a vertical line Z1 extending downward from the outflow-side end 41b of one of the first inclined guide fins 41 passes through a left adjacent first inclined guide fin 41. In other words, when the first inclined guide fins 41 are projected in the vertical direction, the images of the first inclined guide fins 41 projected on the floor partially overlap each other.

An interval between the second inclined guide fins 43 is set similarly to the interval between the first inclined guide fins 41. When the upper end of each of the second inclined guide fins 43 is defined as an outflow-side end 43b and the lower end of each of the second inclined guide fins 43 is defined as an inflow-side end 43a, the interval between the second inclined guide fins 43 is set such that a vertical line Z2 extending downward from the outflow-side end 43b of one of the second inclined guide fins 43 passes through a right adjacent second inclined guide fin 43. In other words, when the second inclined guide fins 43 are projected in the vertical direction, the images of the second inclined guide fins 43 projected on the floor partially overlap each other.

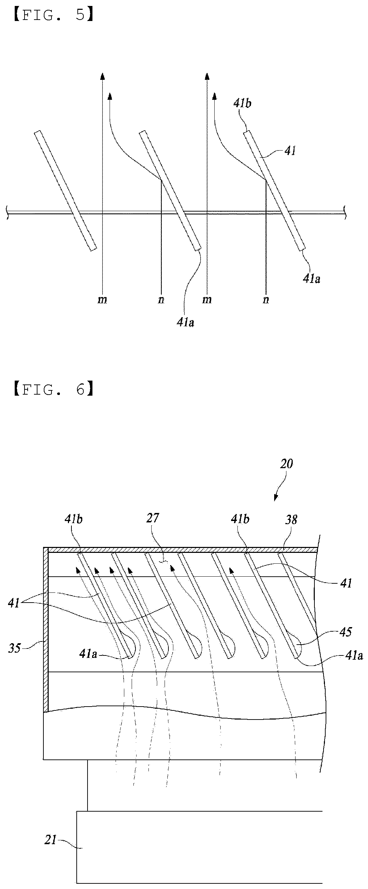

FIG. 5 is a view for explaining a problem caused when the interval between the first inclined guide fins shown in FIG. 4 is so large that the images of the first inclined guide fins projected on the floor do not overlap each other. A description of a problem caused when the interval between the second inclined guide fins is large will be omitted.

As shown in the drawing, when the interval between the first inclined guide fins 41 is large, a portion of the hot air flowing upward from below passes straight in the direction of arrow m between the first inclined guide fins 41. That is, a portion of the hot air flows vertically upward without colliding with the first inclined guide fins 41.

This vertical flow of hot air is not used to suppress the generation of wrinkles 5, but impedes the flow of hot air used to suppress the generation of wrinkles 5. That is, the hot air flowing vertically upward collides with the hot air that is refracted by colliding with the first inclined guide fins 41 and flows in an oblique direction as indicated by the arrow n, thereby impeding the oblique flow of hot air. As a result, the hot air flowing in the oblique direction indicated by the arrow n is not used to suppress the generation of wrinkles 5. This problem is solved by reducing the interval between the first inclined guide fins 41, as shown in FIG. 4, in order to prevent a portion of the hot air from flowing vertically upward without colliding with the first inclined guide fins 41. Such a solution is also applied to the second inclined guide fins 43.

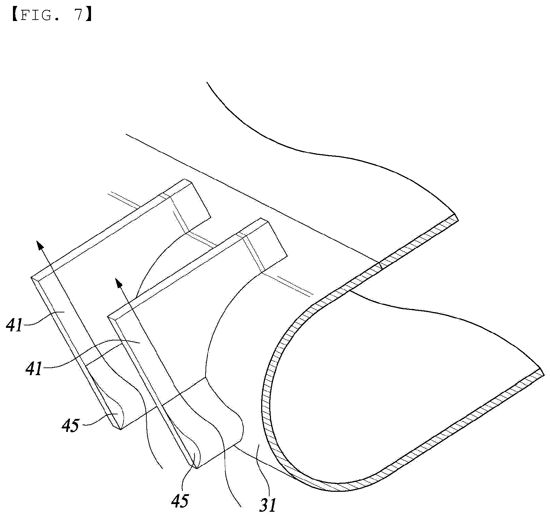

FIG. 6 is a view showing a modified example of the first inclined guide fins applicable to the Coanda effect hot air blower according to an embodiment of the present invention. FIG. 7 is a partially cut-away perspective view three-dimensionally showing the appearance of the first inclined guide fins shown in FIG. 6.

The same reference numerals as those mentioned above represent the same components performing the same functions.

As shown in the drawings, an inflow stream guide 45 is provided on one side surface of the inflow-side end 41a of each of the first inclined guide fins 41. Similarly, an inflow stream guide 45 is provided on one side surface of the inflow-side end 43a of each of the second inclined guide fins 43.

The inflow stream guide 45 functions to guide the hot air entering a region between the first inclined guide fins 41 and a region between the second inclined guide fins 43 to flow in a streamlined manner, thereby minimizing collision of the hot air with the first and second inclined guide fins and guiding the hot air to flow the shortest route along the first and second inclined guide fins. That is, the inflow stream guide 45 functions as a Coanda surface that attracts the hot air approaching the first and second inclined guide fins. In this way, application of the inflow stream guide 45 may maximize the kinetic energy of the hot air passing through the nozzle slit 27.

As is apparent from the above description, the Coanda effect hot air blower according to the present invention discharges hot air in an oblique direction from the center point of an electrode web of a secondary battery in the width direction toward the two opposite peripheral portions of the electrode web in the width direction. Accordingly, air pressure acts such that a center uncoated region between coated regions in the electrode web of a secondary battery spreads in the width direction of the electrode web, thereby suppressing the generation of wrinkles in the center uncoated region. As a result, a defect rate is reduced when manufacturing an electrode of a secondary battery, and the productivity of good products is improved.

Although the present invention has been described with reference to embodiments illustrated in the drawings, it is to be understood that the embodiments are merely exemplary. Therefore, the true scope of protection of the present invention should be determined only by the appended claims.

## Claims

1. Coanda effect hot air blower (20) configured to discharge hot air in order to dry a web (1) of an electrode of a secondary battery in which a plurality of coated regions (WA) and a plurality of uncoated regions (WO1) are alternately disposed in a width direction, the Coanda effect hot air blower (20) comprising a housing (25) configured to receive hot air supplied from a hot air generating unit (21), the housing (25) comprising a nozzle slit (27) formed so as to extend in a width direction of the web (1) to discharge the hot air to outside of the housing (25),
wherein the housing (25) is provided therein with a guide side wall (35) connected to an upper end and a lower end of the nozzle slit (27) to guide the hot air to the nozzle slit (27),
wherein the guide side wall (35) is provided with a plurality of first inclined guide fins (41) and a plurality of second inclined guide fins (43) extending so as to be inclined in opposite directions with respect to a center point of the web (1) in the width direction, the plurality of first inclined guide fins (41) is formed to be parallel to each other, and the plurality of second inclined guide fins (43) is formed to be parallel to each other,
wherein hot air discharged through the nozzle slit (27) after being guided by the plurality of first inclined guide fins (41) and hot air discharged through the nozzle slit (27) after being guided by the plurality of second inclined guide fins (43) travel away from each other in the width direction of the web (1),
wherein the plurality of first inclined guide fins (41) and the plurality of second inclined guide fins (43) are formed in a shape of a plate having a predetermined thickness,
wherein an interval between the plurality of first inclined guide fins (41) and an inclination of the plurality of first inclined guide fins (41) are set such that a vertical line (Z1) extending from an upper end of one of the plurality of first inclined guide fins (41) passes through an adjacent first inclined guide fin (41),
wherein an interval between the plurality of second inclined guide fins (43) and an inclination of the plurality of second inclined guide fins (43) are set such that a vertical line (Z2) extending from an upper end of one of the plurality of second inclined guide fins (43) passes through an adjacent second inclined guide fin (43),
wherein an angle between the plurality of first inclined guide fins (41) and the plurality of second inclined guide fins (43) is 20 degrees to 90 degrees, and
wherein air pressure acts such that the web (1) spreads in the width direction to suppress generation of wrinkles in the web (1).

2. Coanda effect hot air blower (20) according to claim 1, wherein the web (1) is a web of an electrode of a secondary battery comprising an electrode current collector (2) and an electrode material (4) applied to the electrode current collector (2).

3. Coanda effect hot air blower (20) according to claim 1, wherein each of the plurality of first inclined guide fins (41) comprises an inflow-side end (41a) and an inflow stream guide (45) provided on the inflow-side end (41a) to guide hot air entering a region between the plurality of first inclined guide fins (41) so that the hot air flows parallel to the plurality of first inclined guide fins (41), and
wherein each of the plurality of second inclined guide fins (43) comprises an inflow-side end (43a) and an inflow stream guide (45) provided on the inflow-side end (43a) to guide hot air entering a region between the plurality of second inclined guide fins (43) so that the hot air flows parallel to the plurality of second inclined guide fins (43).

4. Apparatus for drying a web (1) of an electrode of a secondary battery comprising an electrode current collector (2) and an electrode material (4) applied to the electrode current collector (2), the apparatus (10) comprising:
a drying chamber (11) configured to allow the web (1) of an electrode of a secondary battery to pass therethrough; and
a plurality of Coanda effect hot air blowers (20) configured to discharge hot air in order to dry the web (1) of an electrode of a secondary battery,
wherein the plurality of Coanda effect hot air blowers (20) is arranged below the web (1) of an electrode of a secondary battery in a feeding direction of the web (1) of an electrode of a secondary battery in the drying chamber (11), and
wherein each of the plurality of Coanda effect hot air blowers is an Coanda effect hot air blower in accordance with claim 1.

5. Apparatus according to claim 4, further comprising a plurality of infrared light heaters (15) configured to radiate infrared light to the web (1) of an electrode of a secondary battery to heat and dry the electrode material (4),
wherein the plurality of infrared light heaters (15) is arranged above the web (1) of an electrode of a secondary battery in the feeding direction of the web (1) of an electrode of a secondary battery in the drying chamber (11).

6. Apparatus according to claim 4, wherein the plurality of Coanda effect hot air blowers (20) is disposed in parallel at the same height in the drying chamber (11) to form a generally horizontal structure.

## Patentansprüche

1. Heißluftgebläse (20) mit Coanda-Effekt, das so konfiguriert ist, dass es Heißluft ausstößt, um eine Bahn (1) einer Elektrode einer Sekundärbatterie zu trocknen, in der mehrere beschichtete Bereiche (WA) und mehrere unbeschichtete Bereiche (WO1) abwechselnd in Breitenrichtung angeordnet sind, wobei das Heißluftgebläse (20) mit Coanda-Effekt ein Gehäuse (25) umfasst, das so konfiguriert ist, dass es von einer Heißlufterzeugungseinheit (21) zugeführte Heißluft aufnimmt, wobei das Gehäuse (25) einen Düsenschlitz (27) umfasst, der so ausgebildet ist, dass er sich in Breitenrichtung der Bahn (1) erstreckt, um die Heißluft nach außerhalb des Gehäuses (25) abzugeben,
wobei das Gehäuse (25) mit einer Führungsseitenwand (35) versehen ist, die mit einem oberen Ende und einem unteren Ende des Düsenschlitzes (27) verbunden ist, um die Heißluft zum Düsenschlitz (27) zu leiten,
wobei die Führungsseitenwand (35) mit einer Vielzahl von ersten geneigten Führungsrippen (41) und einer Vielzahl von zweiten geneigten Führungsrippen (43) versehen ist, die sich so erstrecken, dass sie in Bezug auf einen Mittelpunkt der Bahn (1) in Breitenrichtung in entgegengesetzte Richtungen geneigt sind, wobei die Vielzahl von ersten geneigten Führungsrippen (41) parallel zueinander ausgebildet ist und die Vielzahl von zweiten geneigten Führungsrippen (43) parallel zueinander ausgebildet sind,
wobei die durch den Düsenschlitz (27) austretende Heißluft, nachdem sie durch die mehreren ersten geneigten Führungsrippen (41) geführt wurde, und die durch den Düsenschlitz (27) austretende Heißluft, nachdem sie durch die mehreren zweiten geneigten Führungsrippen (43) geführt wurde, in Breitenrichtung der Bahn (1) voneinander wegströmen,
wobei die mehreren ersten geneigten Leitrippen (41) und die mehreren zweiten geneigten Leitrippen (43) in Form einer Platte mit einer vorbestimmten Dicke ausgebildet sind,
wobei ein Abstand zwischen der Vielzahl von ersten geneigten Leitrippen (41) und eine Neigung der Vielzahl von ersten geneigten Leitrippen (41) so eingestellt sind, dass eine vertikale Linie (Z1), die sich von einem oberen Ende einer der Vielzahl von ersten geneigten Leitrippen (41) erstreckt, durch eine benachbarte erste geneigte Leitrippe (41) verläuft,
wobei ein Abstand zwischen den mehreren zweiten geneigten Führungsrippen (43) und eine Neigung der mehreren zweiten geneigten Führungsrippen (43) so eingestellt sind, dass eine vertikale Linie (Z2), die sich von einem oberen Ende einer der mehreren zweiten geneigten Führungsrippen (43) erstreckt, durch eine benachbarte zweite geneigte Führungsrippe (43) verläuft,
wobei ein Winkel zwischen der Vielzahl von ersten geneigten Führungsrippen (41) und der Vielzahl von zweiten geneigten Führungsrippen (43) 20 Grad bis 90 Grad beträgt, und
wobei Luftdruck so wirkt, dass sich die Bahn (1) in Breitenrichtung ausbreitet, um die Bildung von Falten in der Bahn (1) zu unterdrücken.

2. Heißluftgebläse (20) nach Anspruch 1, wobei die Bahn (1) eine Bahn einer Elektrode einer Sekundärbatterie ist, die einen Elektrodenstromkollektor (2) und ein auf den Elektrodenstromkollektor (2) aufgebrachtes Elektrodenmaterial (4) umfasst.

3. Heißluftgebläse (20) nach Anspruch 1, wobei jede der mehreren ersten geneigten Leitrippen (41) ein Einströmungsende (41a) und eine Einströmungsstromführung (45) aufweist, die an dem Einströmungsende (41a) vorgesehen ist, um Heißluft, die in einen Bereich zwischen den mehreren ersten geneigten Leitrippen (41) strömt, so dass die Heißluft parallel zu den mehreren ersten geneigten Leitrippen (41) strömt, und
wobei jede der mehreren zweiten geneigten Leitrippen (43) ein einströmseitiges Ende (43a) und eine an dem einströmseitigen Ende (43a) vorgesehene Einströmungsführung (45) umfasst, um heiße Luft, die in einen Bereich zwischen den mehreren zweiten geneigten Leitrippen (43) eintritt, so zu leiten, dass die heiße Luft parallel zu den mehreren zweiten geneigten Leitrippen (43) strömt.

4. Vorrichtung zum Trocknen einer Bahn (1) einer Elektrode einer Sekundärbatterie, die einen Elektrodenstromkollektor (2) und ein auf den Elektrodenstromkollektor (2) aufgebrachtes Elektrodenmaterial (4) umfasst, wobei die Vorrichtung (10) umfasst:
eine Trockenkammer (11), die so konfiguriert ist, dass die Bahn (1) einer Elektrode einer Sekundärbatterie durch sie hindurchgeführt werden kann; und
eine Vielzahl von Heißluftgebläsen (20) mit Coanda-Effekt, die so konfiguriert sind, dass sie Heißluft ausstoßen, um die Bahn (1) einer Elektrode einer Sekundärbatterie zu trocknen,
wobei die mehreren Heißluftgebläse (20) mit Coanda-Effekt unterhalb der Bahn (1) einer Elektrode einer Sekundärbatterie in einer Zuführrichtung der Bahn (1) einer Elektrode einer Sekundärbatterie in der Trockenkammer (11) angeordnet sind, und wobei jedes der mehreren Heißluftgebläse mit Coanda-Effekt ein Heißluftgebläse mit Coanda-Effekt gemäß Anspruch 1 ist.

5. Vorrichtung gemäß Anspruch 4, die ferner mehrere Infrarotlicht-Heizgeräte (15) umfasst, die so konfiguriert sind, dass sie Infrarotlicht auf die Bahn (1) einer Elektrode einer Sekundärbatterie strahlen, um das Elektrodenmaterial (4) zu erwärmen und zu trocknen,
wobei die mehreren Infrarotstrahler (15) über der Bahn (1) einer Elektrode einer Sekundärbatterie in der Zuführrichtung der Bahn (1) einer Elektrode einer Sekundärbatterie in der Trockenkammer (11) angeordnet sind.

6. Vorrichtung nach Anspruch 4, wobei die mehreren Heißluftgebläse (20) mit Coanda-Effekt parallel auf gleicher Höhe in der Trockenkammer (11) angeordnet sind, um eine im Allgemeinen horizontale Struktur zu bilden.

## Revendications

1. Soufflante d'air chaud à effet Coand 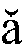 (20) prévue pour refouler de l'air chaud afin de sécher une bande (1) d'une électrode d'une batterie secondaire où une pluralité de zones revêtues (WA) et une pluralité de zones non revêtues (WO1) sont disposées en alternance dans le sens de la largeur, ladite soufflante d'air chaud à effet Coand 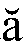 (20) comprenant un boîtier (25) prévu pour recevoir de l'air chaud provenant d'une unité de génération d'air chaud (21), ledit boîtier (25) présentant une fente de buse (27) formée de manière à s'étendre dans le sens de la largeur de la bande (1) afin de refouler l'air chaud à l'extérieur du boîtier (25),
où le boîtier (25) est pourvu d'une paroi latérale de guidage (35) raccordée à une extrémité supérieure et à une extrémité inférieure de la fente de buse (27) pour guider l'air chaud vers la fente de buse (27),
où la paroi latérale de guidage (35) est pourvue d'une pluralité de premières ailettes de guidage inclinées (41) et d'une pluralité de deuxièmes ailettes de guidage inclinées (43) s'étendant en inclinaison dans des directions opposées par rapport à un point central de la bande (1) dans le sens de la largeur, la pluralité de premières ailettes de guidage inclinées (41) étant formée de manière à être parallèles les unes aux autres, et la pluralité de deuxièmes ailettes de guidage inclinées (43) étant formée de manière à être parallèles les unes aux autres,
où l'air chaud refoulé par la fente de buse (27) après avoir été guidé par la pluralité de premières ailettes de guidage inclinées (41) et l'air chaud refoulé par la fente de buse (27) après avoir été guidé par la pluralité de deuxièmes ailettes de guidage inclinées (43) s'éloignent l'un de l'autre dans le sens de la largeur de la bande (1),
où la pluralité de premières ailettes de guidage inclinées (41) et la pluralité de deuxièmes ailettes de guidage inclinées (43) se présentent sous forme de plaque d'épaisseur prédéterminée,
où un intervalle entre la pluralité de premières ailettes de guidage inclinées (41) et une inclinaison de la pluralité de premières ailettes de guidage inclinées (41) sont définis de sorte qu'une ligne verticale (Z1) s'étendant depuis une extrémité supérieure d'une des premières ailettes de guidage inclinées (41) traverse une première ailette de guidage inclinée adjacente (41),
où un intervalle entre la pluralité de deuxièmes ailettes de guidage inclinées (43) et une inclinaison de la pluralité de deuxièmes ailettes de guidage inclinées (43) sont définis de sorte qu'une ligne verticale (Z2) s'étendant depuis une extrémité supérieure d'une des deuxièmes ailettes de guidage inclinées (43) traverse une deuxième ailette de guidage inclinée adjacente (43),
où un angle entre la pluralité de premières ailettes de guidage inclinées (41) et la pluralité de deuxièmes ailettes de guidage inclinées (43) est compris entre 20 degrés et 90 degrés, et où la pression d'air agit de sorte que la bande (1) s'étend dans le sens de la largeur pour supprimer la génération de plis dans la bande (1).

2. Soufflante d'air chaud à effet Coand 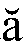 (20) selon la revendication 1, où la bande (1) est une bande d'une électrode d'une batterie secondaire comprenant un collecteur de courant d'électrode (2) et un matériau d'électrode (4) appliqué au collecteur de courant d'électrode (2).

3. Soufflante d'air chaud à effet Coand 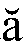 (20) selon la revendication 1, où chaque ailette de la pluralité de premières ailettes de guidage inclinées (41) présente une extrémité côté entrée (41a) et un guidage de flux d'entrée (45) disposé à l'extrémité côté entrée (41a) pour guider l'air chaud pénétrant dans une zone entre la pluralité de premières ailettes de guidage inclinées (41), de sorte que l'air chaud s'écoule parallèlement à la pluralité de premières ailettes de guidage inclinées (41), et
où chaque ailette de la pluralité de deuxièmes ailettes de guidage inclinées (43) présente une extrémité côté entrée (43a) et un guidage de flux d'entrée (45) disposé à l'extrémité côté entrée (43a) pour guider l'air chaud pénétrant dans une zone entre la pluralité de deuxièmes ailettes de guidage inclinées (43), de sorte que l'air chaud s'écoule parallèlement à la pluralité de deuxièmes ailettes de guidage inclinées (43).

4. Appareil de séchage d'une bande (1) d'une électrode d'une batterie secondaire comprenant un collecteur de courant d'électrode (2) et un matériau d'électrode (4) appliqué au collecteur de courant d'électrode (2), ledit appareil (10) comprenant :
un compartiment de séchage (11) prévu pour permettre le passage de la bande (1) d'une électrode d'une batterie secondaire ; et
une pluralité de soufflantes d'air chaud à effet Coand 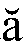 (20) prévues pour refouler de l'air chaud afin de sécher la bande (1) d'une électrode d'une batterie secondaire,
où la pluralité de soufflantes d'air chaud à effet Coand 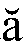 (20) est disposée sous la bande (1) d'une électrode d'une batterie secondaire dans la direction d'avance de la bande (1) d'une électrode d'une batterie secondaire dans le compartiment de séchage (11), et
où chaque soufflante de la pluralité de soufflantes d'air chaud à effet Coandǎ est une soufflante d'air chaud à effet Coand 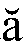 selon la revendication 1.

5. Appareil selon la revendication 4, comprenant en outre une pluralité d'éléments chauffants à lumière infrarouge (15) prévus pour émettre une lumière infrarouge vers la bande (1) d'une électrode d'une batterie secondaire afin de chauffer et sécher le matériau d'électrode (4),
où la pluralité d'éléments chauffants à lumière infrarouge (15) est disposée au-dessus de la bande (1) d'une électrode d'une batterie secondaire dans la direction d'avance de la bande (1) d'une électrode d'une batterie secondaire dans le compartiment de séchage (11).

6. Appareil selon la revendication 4, où la pluralité de soufflantes d'air chaud à effet Coand 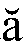 (20) est disposée en parallèle à la même hauteur dans le compartiment de séchage (11) de manière à former une structure sensiblement horizontale.
